# EUROPEAN PATENT APPLICATION

(11) **EP 1 313 096 A1**
(43) Date of publication of application: **21.05.2003**
(21) Application number: 01958467.1
(22) Date of filing: 24.08.2001
(51) Int. Cl.: G11B 7/24, C09B 57/10

(54) **OPTICAL RECORDING MEDIUM**

(30) Priority: 25.08.2000 JP 2000255879
(71) Applicant: MITSUBISHI CHEMICAL CORPORATION, Chiyoda-ku, Tokyo 100-0005 (JP)
(72) Inventor: NAKAJIMA, Akira, c/o Mitsubishi Chemical Corp., Yokohama-shi, Kanagawa 227-8502 (JP); NODA, Yoshihiro, c/o Mitsubishi Chemical Corp., Yokohama-shi, Kanagawa 227-8502 (JP); SHODA, Hisashi, c/o Mitsubishi Chemical Corp., Yokohama-shi, Kanagawa 227-8502 (JP); TAKISAWA, Toshifumi, c/o Mitsubishi Chemical Corp., Yokohama-shi, Kanagaa 227-8502 (JP); TAKESHIMA, Hideharu, c/o Mitsubishi Chemical Corp., Yokohama-shi, Kanagawa 227-8502 (JP)
(74) Representative: ter Meer, Nicolaus
(86) International application number: JP0107259
(87) International publication number: WO02017314

(57) **Abstract**

It is to provide an optical recording medium suitable for information recording at a high speed.

An optical recording medium which comprises a transparent substrate and a recording layer containing a light absorptive dye formed on the substrate, wherein the recording layer satisfies all of the following (1) to (3), the light absorptive dye satisfies the following (4) and the transparent substrate satisfies the following (5) :
(1) the recording layer has a maximum absorption wavelength within a wavelength range of from 670 to 750 nm,
(2) the absorbance of the recording layer at a maximum absorption wavelength is from 0.7 to 0.9,
(3) the absorbance of the recording layer at a wavelength of 780 nm is from 10 to 30% of the absorbance at a maximum absorption wavelength,
(4) the heat release value of the light absorptive dye is from 500 to 100 µV•sec/mg as measured by differential thermal analysis in nitrogen, and
(5) the transparent substrate has guide grooves for recording/reproducing light having a width of from 400 to 500 nm and a depth of from 120 to 160 nm.

## Description

### TECHNICAL FIELD

The present invention relates to a recordable optical recording medium, particularly a recordable optical recording medium compatible with a read only compact disk, called CD-R.

### BACKGROUND ART

In recent years, write once CDs (compact disks) have actively been developed. Users can record information on these CDs, which is different from conventional CDs, and since signals after recording satisfy specifications of conventional CDs, reproducing by a commercially available CD player is possible.

As one method for realizing such a medium, JP-A-2-42652 proposes to form a light absorptive layer by spin coating a dye on a substrate, and to provide a metal reflective layer thereon. Further, as disclosed in JP-A-2-132656, signals after recording satisfy CD specifications by appropriately selecting the film thickness and the index of birefringence of a light absorptive layer. This optical recording medium is commercialized as a CD-R medium at present.

On the other hand, with regard to a recording drive, conventionally equal-speed recording (which means recording at a speed equal to reproducing speed of music CDs, about 1.2 m/s) is carried out, but the recording speed becomes high in recent years, and quadruple-speed recording (about 4.8 m/s) and 8-times speed recording (about 9.6 m/s) become possible and become widely used. Further, with respect to CD-R as a recording medium, one recordable at a level of 12-times speed (about 14.4 m/s) can be carried out becomes proposed.

However, to record data which corresponds to 80 minutes, for example, about 7 minutes are required even at 12-times speed recording.

Accordingly, to shorten the time required for recording as far as possible, an optical recording medium recordable at a higher speed, specifically, recordable at 16-times, 24-times or above the CD reproducing speed, has been desired.

As a method to realize a high speed recording, a method of increasing the sensitivity of a dye so that the dye reacts even when irradiated with light for a shorter period of time, and a method of making the thickness of the recording layer thin so as not to increase interference between recording pits (not to deteriorate jitters) even when recording is carried out with a light having a higher power.

However, simply by increasing the sensitivity of the dye, the light absorption amount of the dye increases correspondingly, thus decreasing the reflectance. Further, if the thickness of the recording layer is made thin so that the interference between recording pits can adequately be suppressed, a significant increase in a power required for recording is caused, whereby recording can not be carried out with a laser diode which is used as a light source of recording light in a practical drive at present, such being problematic.

Further, in a case where the recording layer is made thin, it is usually required to make grooves on a substrate of an optical recording medium deep or wide so as to maintain sensitivity, because it is required to obtain the amount of the dye per recording layer through which a laser light for recording passes in a certain time.

However, making grooves on a substrate deep or wide means that transcription in formation of a substrate becomes difficult, such being unfavorable in view of efficiency in industrial production.

JP-A-2-132656 discloses in Example 4 an optical recording medium comprising a polycarbonate substrate having spiral pregrooves having a width of 0.5 µm and a depth of 0.15 µm with a pitch of 1.6 µm, a light absorptive layer having a thickness of 0.025 µm, containing 0.050 g of 1,1'-dibutyl-3,3,3'-3'-tetramethyl-4,5,4',5'-dibenzoindodicarbocyanine perchlorate (NK 3219, manufactured by Nihon Kanko Shikiso K.K.) and 0.005 g of nitrocellulose, an Au reflective layer and a protective layer formed on the substrate.

However, as disclosed in Comparative Example 5 of the present application as mentioned hereinafter, the heat release value of said cyanine type figment is extremely high at the time of dye decomposition. If such a dye is used for a recording layer, a record mark tends to be enlarged, such being unfavorable.

Further, JP-A-8-287521 discloses in Example 1 an optical recording medium comprising a polycarbonate substrate having pregrooves in an approximately V-shape cross section having a depth of 160 nm and a groove width of 0.7 µm at a level of 90% of the depth, with a track pitch of 1.6 µm, and a recording layer containing a phthalocyanine dye represented by the following structural formula: 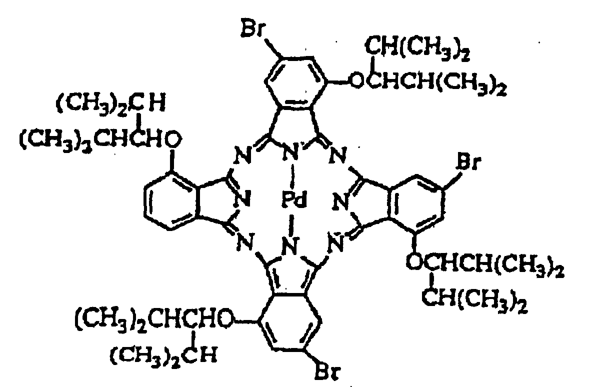 (absorbance of 0.8 at a maximum absorption wavelength of the dye), a metal reflective layer and a protective layer formed on the substrate. Further, in Comparative Example 1, an optical recording medium prepared in the same manner as in Example 1 except that pregrooves have an approximately inverse trapezoid cross-section shape having a depth of 160 nm and a groove width of 0.7 µm at a level of 90% of the depth, with a track pitch of 1.6 µm, is disclosed.

However, of the phthalocyanine dye as represented by the above structural formula, the heat release value is extremely low at the time of dye decomposition, as shown in Comparative Example 1 as described hereinafter. Further, of the recording layer containing said dye as the main component, the absorbance at a wavelength of 780 nm is at a level of 8.8% of the absorbance at a maximum absorption wavelength. In a case where the recording layer containing such a dye as the main component is provided on the above substrate having relatively narrow and shallow guide grooves, the obtained optical recording medium has a low sensitivity at the time of high speed recording on the whole. Further, in order to obtain an optical recording medium having a good recording sensitivity by using such a recording layer, it is necessary to employ a substrate having extremely wide guide grooves, to maintain the amount of the dye per recording layer through which a laser light for recording passes in a certain time. However, with respect to a substrate having wide guide grooves, transcription in preparation tends to be difficult, and the efficiency in industrial production tends to be poor.

### DISCLOSURE OF THE INVENTION

To overcome the above problems, the present inventors have found to adjust "the absorbance of a recording layer which is appropriate to a high speed recording" in a specified range, and have found "a suitable heat release value of a light absorptive dye contained in the recording layer" and "the shape of grooves on a substrate which is suitable for the recording layer and which is also advantageous in view of industrial production", and accomplished the present invention.

Namely, the present invention resides in an optical recording medium which comprises a transparent substrate and a recording layer containing a light absorptive dye formed on the substrate, wherein the recording layer satisfies all of the following (1) to (3), the light absorptive dye satisfies the following (4) and the transparent substrate satisfies the following (5):
(1) the recording layer has a maximum absorption wavelength within a wavelength range of from 670 to 750 nm,
(2) the absorbance of the recording layer at a maximum absorption wavelength is from 0.7 to 0.9,
(3) the absorbance of the recording layer at a wavelength of 780 nm is from 10 to 30% of the absorbance at a maximum absorption wavelength,
(4) the heat release value of the light absorptive dye is from 500 to 100 µV•sec/mg as measured by differential thermal analysis in nitrogen, and
(5) the transparent substrate has guide grooves for recording/reproducing light having a width of from 400 to 500 nm and a depth of from 120 to 160 nm.

### BRIEF DESCRIPTION OF THE DRAWINGS

Fig. 1 is a diagram illustrating the relation of the recording layer with the reflectance and the degree of modulation of the optical recording medium of the present invention.

Fig. 2 is a diagram illustrating the range of preferred groove shape in a case where a recording layer having an absorbance of 0.8 at a maximum absorption wavelength is used in the optical recording medium of the present invention.

Fig. 3 is a chart illustrating TG-DTA measurement results of a metal-containing azo-type dye used in Example 3.

Fig. 4 is a chart illustrating TG-DTA measurement results of a phthalocyanine type dye used in Comparative Example 1.

### BEST MODE FOR CARRYING OUT THE INVENTION

The optical recording medium of the present invention has such a structure that on a transparent substrate, at least a recording layer, a reflective layer and a protective layer are sequentially laminated. Between the layers, an optional layer may be formed within a range of not impairing the performance of the optical recording medium of the present invention.

The recording layer of the optical recording medium of the present invention contains a light absorptive dye, has a maximum absorption wavelength within a wavelength range of from 670 to 750 nm, an absorbance of from 0.7 to 0.9 at a maximum absorption wavelength, and an absorbance at a wavelength of 780 nm of from 10 to 30% of the absorbance at a maximum absorption wavelength.

In the present invention, the absorbance can be measured, for example, by means of a spectrophotometer "U-3300" manufactured by Hitachi, Limited.

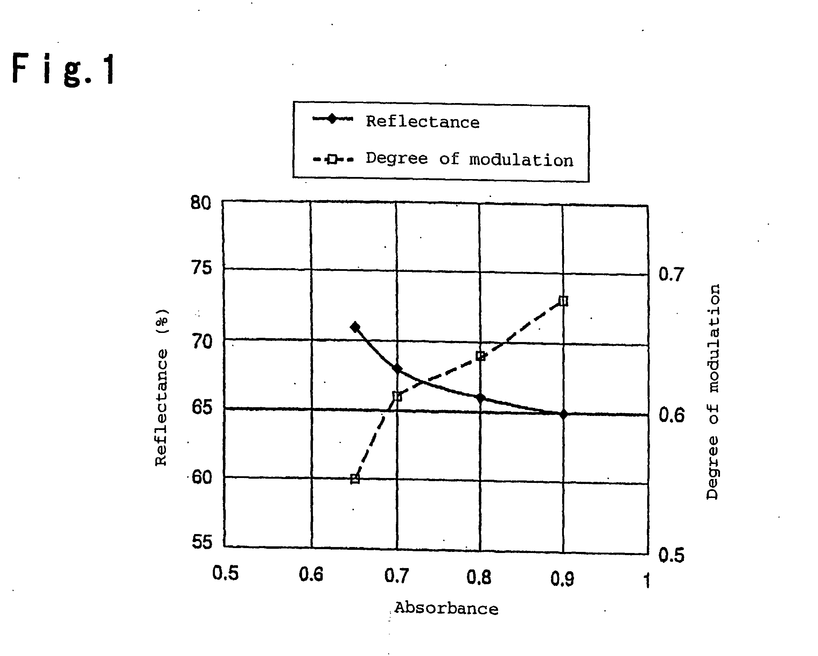

As shown in Fig. 1, in a case where the absorbance at a maximum absorption wavelength is less than 0.7, it tends to be difficult to satisfy the degree of modulation I₁₁/Iₜₒₚ>0.6, and if it exceeds 0.9, it tends to be difficult to satisfy the reflectance>65%, whereby an optical recording medium in accordance with orange book which specifies CD-R can be hardly be obtained, and both cases are unfavorable. Here, "Iₜₒₚ" is a maximum amount of reflected light of reproducing signals of a CD, and "I₁₁" is an optical modulation component which corresponds to a difference between the amount of reflected light which is difracted by a longest pit recorded and returns to an object lens, and the amount of reflected light which is reflected on a non-pit portion and returns to an object lens.

If the absorbance at a wavelength of 780 nm is less than 10% of the absorbance at a maximum absorption wavelength, the sensitivity tends to be inadequate, whereby a required record power tends to be large, and it is estimated that recording by a practical drive at present which employs a laser diode as a light source of recording light tends to be difficult. Further, in a case where said absorbance exceeds 30%, the reflectance of the optical recording medium tends to be low, and there may be a problem in compatibility with a compact disk. The absorbance at a wavelength of 780 nm is preferably from 10 to 20% of the absorbance at a maximum absorption wavelength.

The optical recording medium of the present invention has guide grooves for recording/reproducing light on a transparent substrate, and said guide grooves have a width of from 400 to 500 nm and a depth of from 120 to 160 nm. In the present invention, the groove width and the groove depth of the guide grooves are values calculated from an optical groove shape obtained by measuring the intensity of diffracted light and calculating said measured value. For measurement and calculation, "MT-126" manufactured by Dr. Schenk may, for example, be used.

The above groove shape preferred for the optical recording medium of the present invention was obtained by preparing a sample by the following method.

Five sheets each of four types of injection-molded polycarbonate transparent resin substrates having a diameter of 120 mm, the groove width of which gradually changes from 300 to 600 nm in a radius direction, and the groove depths of which are 110 nm, 130 nm, 150 nm and 180 nm, respectively, were prepared. Here, the track pitch was 1.6 µm in all substrates.

A solution containing a light absorptive dye (metal-containing azo type dye) was spin-coated on these substrates, followed by drying, to provide recording layers having their film thicknesses adjusted so that the absorbances at a maximum absorption wavelength were 0.6, 0.7, 0.8, 0.9 and 1.0, respectively, on the substrates having each groove depth.

Then, a silver film having a thickness of 80 nm was formed on each of the recording layers to obtain a reflective layer, and an ultraviolet curing resin layer having a thickness of 5 µm was further formed thereon to obtain a protective layer, to prepare samples.

With respect to each sample, EFM signals were recorded by means of a commercially available CD-R drive having a semiconductor laser at a wavelength of 780 nm mounted thereon at a linear velocity of 9.6 m/s (8-times speed). Then, recording properties of each sample after recording were evaluated by a commercially available CD evaluator.

From the evaluation results, it became clear that it tends to be difficult to make the reflectance at least 65% in a case where the groove width of the guide grooves on a transparent substrate is less than 400 nm, and if it exceeds 500 nm, it tends to be difficult to satisfy the degree of modulation I₁₁/Iₜₒₚ>0.6, such being unfavorable.

Further, it became clear that if the groove depth is less than 120 nm, the radial contrast is less than 0.3 (specification) at a recording portion, and if it exceeds 160 nm, the sensitivity tends to be inadequate, whereby recording becomes impossible even at 8-times speed recording.

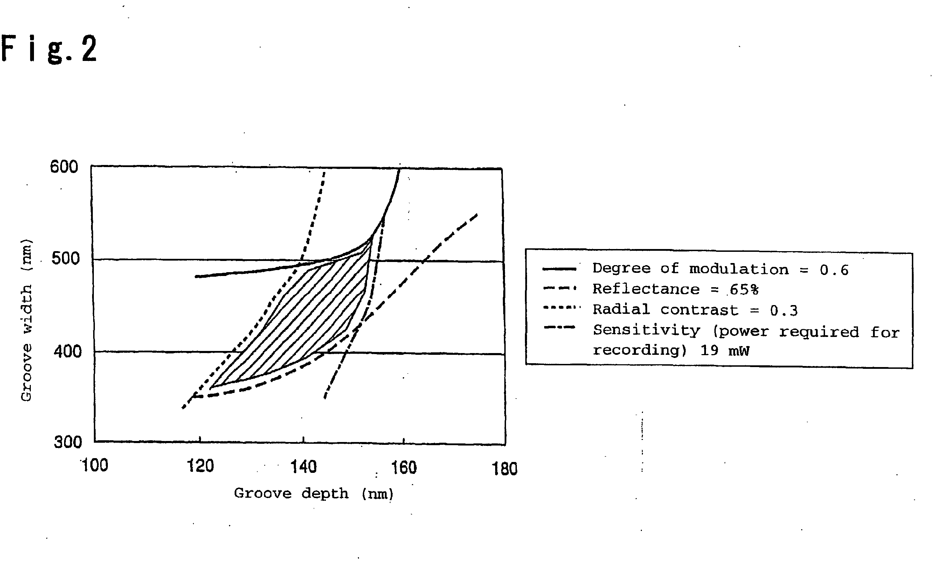

As mentioned above, the groove shape preferred in view of reflectance, degree of modulation, radial contrast and recording sensitivity was examined with respect to recording layers having absorbances of from 0.7 to 0.9, whereupon preferred ranges are from 400 to 500 nm with respect to the groove width and from 120 to 160 nm with respect to the groove depth. In Fig. 2 is shown a range of a preferred groove shape in a case where a recording layer having an absorbance of 0.8 is used.

In the optical recording medium of the present invention, with respect to the light absorptive dye contained in the recording layer, said dye has a heat release value of from 500 to 100 µV•sec/mg as measured by differential thermal analysis in nitrogen. The differential thermal analysis is carried out by means of TG-DTA of a resistance furnace type wherein the absorption of heat of tin (standard substance) at the melting point is 61 µV•sec/mg, in a stream of nitrogen (flow rate: 200 mℓ/min). As a measuring apparatus, "TG/DTA 22" manufactured by Seiko Instruments Inc. may, for example, be used. Plus/minus in measured values of the heat release value varies depending upon an apparatus, and the "heat release value" in the present invention means an absolute value of the heat release value in all cases.

If the heat release value exceeds 500 µV•sec/mg, the record mark tends to be excessively enlarged, whereby jitters may be impaired, such being unfavorable. Further, if it is less than 100 µV•sec/mg, the sensitivity tends to be too low, whereby recording at a high speed which is an object of the present invention tends to be difficult. The heat release value of the light absorptive dye as measured by differential thermal analysis is more preferably from 300 to 100 µV•sec/mg.

Production of a medium capable of realizing good optical recording at a high speed, which is an object of the present invention, with a high efficiency industrially, can not be achieved until all of the following conditions which are very carefully combined are met, such that a dye having specific heat characteristics is used, and a substrate having a specific groove shape is used, in addition that the recording layer has a maximum absorption wavelength in the above wavelength region and has an absorbance within a specific range.

Now, materials, layer construction, etc., constituting the optical recording medium of the present invention, will be explained in detail below.

The material of the substrate in the optical recording medium of the present invention is not particularly limited basically so long as it is transparent at a wavelength of recording light and reproducing light.

As such a material, one made of a synthetic resin such as an acrylic resin, a methacrylic resin, a polycarbonate resin, a polyolefin type resin (particularly amorphous polyolefin), a polyester type resin, a polystyrene resin or an epoxy resin, one made of glass, or one having a resin layer made of a radiation curing resin such as a photo-setting resin formed on glass, may, for example, be used.

Usually, preferred is polycarbonate in view of high productivity, cost, moisture absorption resistance, etc., and preferred is amorphous polyolefin in view of chemical resistance, moisture absorption resistance, etc.

Further, preferred is a glass substrate in view of high speed responsibility, etc.

A resin substrate for a resin layer is provided to be in contact with the recording layer, and on the resin substrate or the resin layer, the above-described guide grooves for recording/reproducing light are provided. In addition to the guide grooves, pits (prepits) which represent e.g. address information may be provided. Such guide grooves or pits are preferably imparted at the time of forming the substrate, but they may be imparted on the substrate by means of a ultraviolet curing resin layer. The groove pitch of the guide grooves is preferably at a level of 1.6 µm.

On the substrate or on an under coat layer provided as the case requires, a recording layer containing a light absorptive dye is provided. Said recording layer satisfies the following:
(1) it has a maximum absorption wavelength within a wavelength range of from 670 to 750 nm,
(2) the absorbance is from 0.7 to 0.9 at a maximum absorption wavelength, and
(3) the absorbance at a wavelength of 780 nm is from 10 to 30% of the absorbance at a maximum absorption wavelength.

The above (1) to (3) are conditions, in a case where the recording layer contains a plural dyes or various additives, which the entire recording layer containing all the components satisfies, and individual component contained in the recording layer, such as a light absorptive dye, does not necessarily have to satisfy the above conditions.

The light absorptive dye is not particularly limited structurally so long as its heat release value as measured by differential thermal analysis satisfies the above condition (4), and a recording layer containing it satisfies the above conditions. It may, for example, be a metal-containing azo type dye, a phthalocyanine type dye, a naphthalocyanine type dye, a cyanine type dye, an azo type dye, a squalilium type dye, a metal-containing indoaniline type dye, a triarylmethane type dye, a merocyanine type dye, an azulenium type dye, a naphthoquinone type dye, an anthraquinone type dye, an indophenol type dye, a xanthene type dye, an oxazine type dye or a pyrylium type dye. Among them, preferred is a cyanine type dye, a phthalocyanine type dye or a metal-containing azo type dye, particularly preferred is a metal-containing azo type dye.

Further, for the purpose of improving light resistance or stability of the recording layer, e.g. a transition metal chelate compound (such as acetylacetonate chelate, bisphenyldithiol, salicylaldehyde oxime or bisdithio-α-diketone) may be incorporated as a singlet oxygen quencher, and for the purpose of improving recording sensitivity, a recording sensitivity improving agent such as a metal type compound may be incorporated. Here, the metal type compound may be a compound having a metal such as a transition metal contained therein in a form of an atom, an ion or a cluster, and examples of which include organic metal compounds such as an ethylene diamine type complex, an azomethine type complex, a phenylhydroxyamine type complex, a phenanthroline type complex, a dihydroxyazobenzene type complex, a dioxime type complex, a nitrosoaminophenol type complex, a pyridyltriazine type complex, an acetylacetonate type complex, a metallocene type complex and a porphyrin type complex. The metal atom is not particularly limited, but a transition metal is preferred.

The recording layer may further contain a binder, a leveling agent, an anti-foaming agent or the like as the case requires.

As a method of forming a recording layer, conventionally conducted thin film forming method such as a vacuum deposition method, a sputtering method, a doctor blade method, a cast method, a spin coating method or a dipping method may be mentioned, but preferred is a spin coat method in view of mass productivity and cost. Further, the vacuum deposition method is more preferred than a coating method from such a viewpoint that a recording layer having a uniform thickness can be obtained.

In a case of film forming by a spin coating method, the number of revolution is preferably from 500 to 15,000 rpm, and after spin coating, heating or exposure to vapor of a solvent may be carried out as the case requires.

The solvent for coating in a case where a recording layer is formed by a coating method such as a doctor blade method, a cast method, a spin coating method or a dipping method, is not particularly limited so long as it is a solvent which does not erode the substrate. It may, for example, be a ketone alcohol type solvent such as diacetone alcohol or 3-hydroxy-3-methyl-2-butanone; a cellosolve type solvent such as methyl cellosolve or ethyl cellosolve; a chain hydrocarbon type solvent such as n-hexane or n-octane; a cyclic hydrocarbon type solvent such as cyclohexane, methylcyclohexane, ethylcyclohexane, dimethylcyclohexane, n-butylcyclohexane, tert-butylcyclohexane or cyclooctane; a perfluoroalkyl alcohol type solvent such as tetrafluoropropanol, octafluoropentanol or hexafluorobutanol; or a hydroxycarboxylate type solvent such as methyl lactate, ethyl lactate or ethyl isobutylate.

In the case of the vacuum deposition method, the dye of the present invention and as the case requires, another dye or a recording layer component such as an additive are put in a crucible installed in the inside of a vacuum container, the inside of the vacuum container is evacuated to a level of from 10⁻² to 10⁻⁵ Pa by an appropriate vacuum pump, then the crucible is heated so that the recording layer component is evaporated and deposited on a substrate which is disposed to face the crucible, to form a recording layer.

The thickness of the recording layer is set so that the absorbance of said layer is from 0.7 to 0.9 at a maximum absorption wavelength as described above. Accordingly, the thickness of said layer varies depending upon properties of the compound such as a light absorptive dye contained. The average thickness may be from 10 nm to 5 µm, preferably from 70 nm to 3 µm, and particularly preferably the thickness on grooves is at a level of from 80 to 120 nm, and the thickness on lands is at a level of from 40 to 60 nm, as measured by cross-section SEM.

A reflective layer is formed on the recording layer directly or by means of another layer, and its thickness is usually from 50 to 300 nm.

As the material of the reflective layer, one having an adequately high reflectance at a wavelength of reproducing light, for example, a metal such as Au, Al, Ag, Cu, Ti, Cr, Ni, Pt, Ta, Cr or Pd may be used alone or as an alloy. Among them, Au, Al and Ag have a high reflectance and are suitable as a material for the reflective layer.

Further, an alloy containing the above metal as the main component and further containing the following metal may also be mentioned. For example, a metal or a semi-metal such as Mg, Se, Hf, V, Nb, Ru, W, Mn, Re, Fe, Co, Rh, Ir, Cu, Zn, Cd, Ga, In, Si, Ge, Te, Pb, Po, Sn or Bi may, for example, be mentioned. Among them, one containing Ag as the main component is particularly preferred from such a viewpoint that the cost is low, a high reflectance is likely to be obtained, and further, in a case where a print-receiving layer is provided as mentioned hereinafter, a beautiful one, the base color of which is white, can be obtained. Here, the main component means a content of at least 50%.

Further, it is also possible to alternately laminate a low refractive index thin film and a high refractive index thin film made of materials other than metals to form a multilayer film, which is used as a reflective layer.

As the method of forming a reflective layer, a sputtering method, an ion plating method, a chemical deposition method or a vacuum deposition method may, for example, be mentioned. Further, a known inorganic or organic interlayer or adhesive layer may be provided on the substrate or below the reflective layer with a purpose of increasing the reflectance, improving recording characteristics or increasing adhesive properties.

The material of the protective layer to be formed on the reflective layer is not particularly limited so long as the reflective layer is protected from external force. As the material of an organic substance, a thermoplastic resin, a thermosetting resin, an electron radiation curing resin or a UV curing resin may, for example, be mentioned. Further, as an inorganic substance, SiO₂, SiN₄, MgF₂ or SnO₂ may, for example, be mentioned.

The thermoplastic resin, the thermosetting resin or the like may be dissolved in a proper solvent, and a coating liquid thus obtained may be coated on the reflective layer, followed by drying to form a protective layer.

The UV curing resin as it is or a coating liquid prepared by dissolving the resin in a proper solvent, is coated on the reflective layer, and irradiated with UV light and cured to form a protective layer. As the UV curing resin, an acrylate type resin such as urethane acrylate, epoxy acrylate or polyester acrylate may, for example, be used. Among them, preferred is UV curing resin as the material of the protective layer.

These materials may be used alone or as mixed, and not only one layer but also a multilayer film may also be employed.

As a method of forming the protective layer, similar to the recording layer, a coating method such as a spin coating method or a cast method, a sputtering method or a chemical vapor deposition method may, for example, be used, and among them, a spin coating method is preferred.

The thickness of the protective layer is usually within a range of from 0.1 to 100 µm, and in the present invention, it is preferably from 3 to 30 µm.

Further, a substrate may further be bonded to the reflective layer face, or two optical recording media may be bonded so that the reflective layer faces face inside. On the mirror surface side of the substrate, a ultraviolet curing resin layer or an inorganic thin film may be formed with a purpose of protecting the surface or preventing deposition of e.g. dust.

Here, on the side which is not the plane of incidence of recording and reproducing light, a print-receiving layer may be provided, on which writing (printing) can be carried out by a printer of e.g. thermal transfer type or writing utensils.

While the invention has been described in detail and with reference to specific embodiments thereof, it will be apparent to one skilled in the art that various changes and modifications can be made therein without departing from the spirit and scope thereof.

This application is based on Japanese Patent Publication No. 2000-255879 filed on August 25, 2000, the entire content thereof being hereby incorporated by reference.

### EXAMPLES

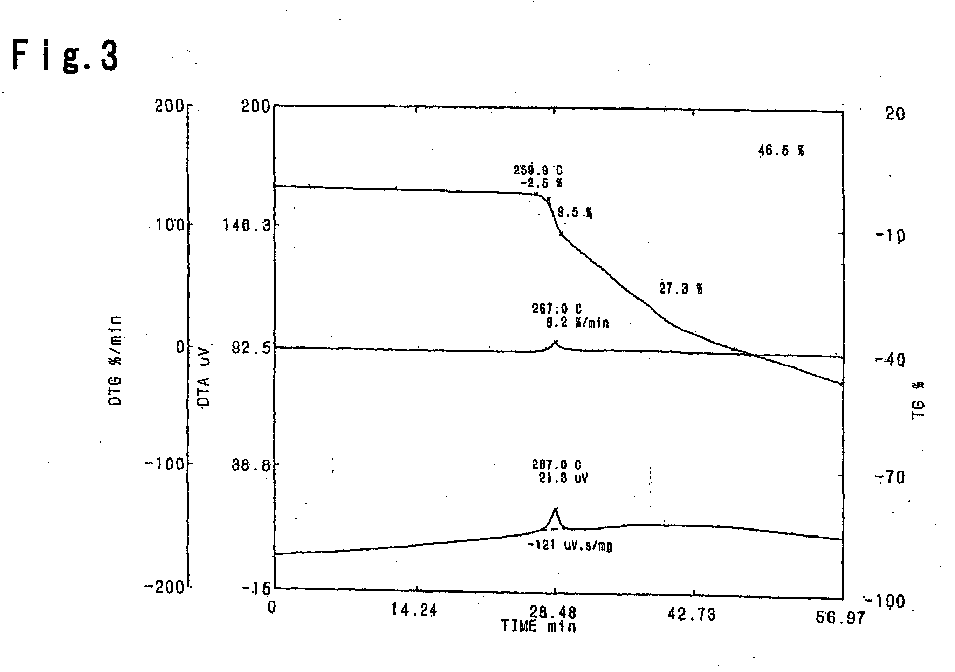

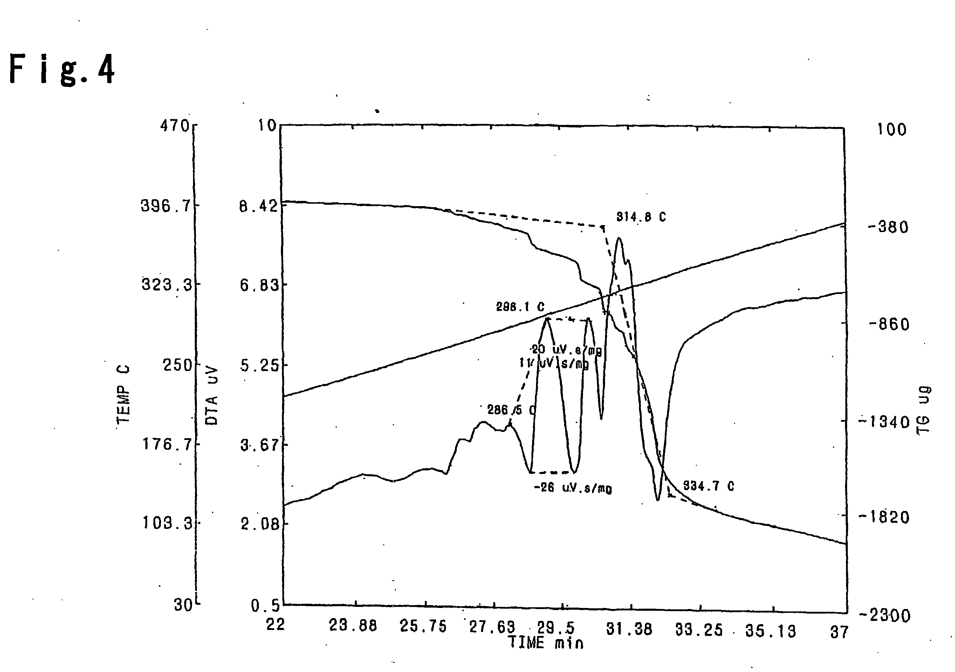

Now, the present invention will be explained in further detail with reference to Examples. However, the present invention is by no means restricted to such Examples unless it exceeds its gist. Further, the heat release values in Examples and Comparative Examples were measured by means of "TG/DTA22" manufactured by Seiko Instruments Inc. The measured values are represented by minus values as shown in Fig. 3 and Fig. 4, but they are all represented by absolute values in the description.

### EXAMPLE 1

On an injection-molding polycarbonate transparent resin substrate having a diameter of 120 mm, having guide grooves with a groove width of 440 nm and a groove depth of 130 nm at a track pitch of 1.6 µm, a 3.5% octafluoropentanol solution of a dye represented by the following structural formula: 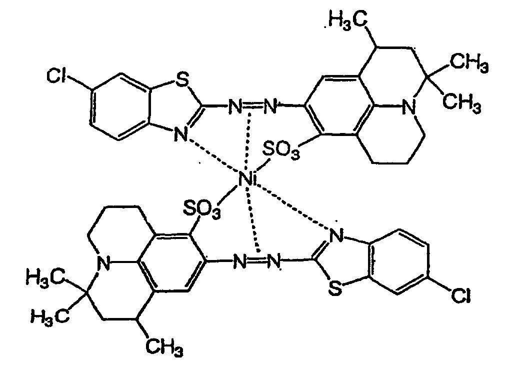 was spin coated, followed by drying at 100°C to provide a recording layer having the thickness adjusted so that the absorbance would be 0.8 at a maximum absorption wavelength. Of the above dye, the heat release value 114 µV•sec/mg as measured by differential thermal analysis was in nitrogen.

Then, on the recording layer, a silver film having a thickness of 80 nm was provided to form a reflective layer, and a ultraviolet curing resin layer having a thickness of 5 µm was further formed thereon to form a protective layer to form an optical recording medium.

Here, the recording layer thickness was measured by means of cross-section SEM, whereupon it was 110 nm on grooves and 55 nm on lands.

Of this optical recording medium, sensitivity in 8-times speed (9.6 m/s) recording was measured by means of a CD-R evaluation apparatus ("CD-TR" manufactured by EXPERT MAGNETICS CORP., drive used: "CD-R58S manufactured by TEAC Corporation"), whereupon the optimum recording power (β=0) was at most 19 mW.

Further, on this optical recording medium, EFM signals were recorded at a linear velocity of 9.6 m/s (8-times speed) by means of a CD-R drive (CD-R drive Px-820T, manufactured by Shinano Kenshi Co., Ltd.) having a semiconductor laser at a wavelength of 780 nm mounted thereon. Recording characteristics of the medium after recording were evaluated by a CD evaluation machine ("CD-CATS SA3" manufactured by Audio Development), whereupon Rₜₒₚ=68%, I₁₁/Iₜₒₚ=77% and the radial contrast was 0.34, and every value was good.

### EXAMPLE 2

An optical recording medium was prepared in the same manner as in Example 1 except that the groove depth of the guide grooves was 150 nm, and recording of EFM signals and evaluation were carried out. As a result, the optimum recording power was at most 19 mW, Rₜₒₚ=68%, I₁₁/Iₜₒₚ=80% and the radial contrast was 0.41, and every value was good.

### EXAMPLE 3

An optical recording medium was prepared in the same manner as in Example 1 except that the dye was changed to a dye represented by the following structural formula: 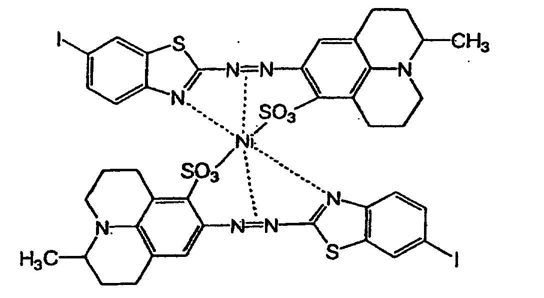 and recording EFM signals and evaluation were carried out. Of the above dye, the heat release value was 121 µV•sec/mg as measured by differential thermal analysis. Further, a chart obtained by TG-DTA measurement is shown in Fig. 3.

As a result of evaluation, the optimum recording power was at most 18 mW, Rₜₒₚ=66%, I₁₁/Iₜₒₚ=77% and the radial contrast was 0.35, and every value was good.

### EXAMPLE 4

An optical recording medium was prepared in the same manner as in Example 2 except that the dye was changed to a dye represented by the following structural formula: 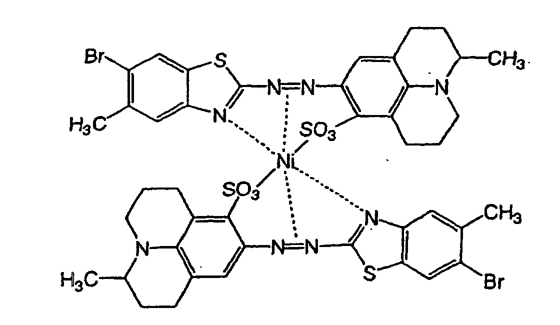 and recording of EFM signals and evaluation were carried out. Of the above dye, the heat release value was 185 µV•sec/mg measured by differential thermal analysis.

As a result of evaluation, the optimum recording power was at most 20 mW, Rₜₒₚ=70%, I₁₁/Iₜₒₚ=74% and the radial contrast was 0.36, and every value was good.

### EXAMPLE 5

An optical recording medium was prepared in the same manner as in Example 2 except that the dye was changed to a dye represented by the following structural formula: 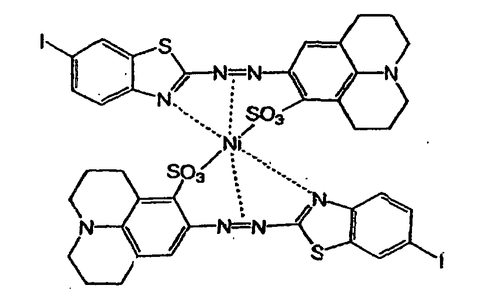 and recording of EFM signals and evaluation were carried out. Of the above dye, the heat release value was 134 µV•sec/mg as measured by differential thermal analysis.

As a result of evaluation, the optimum recording power was at most 16 mW, Rₜₒₚ=70%, I₁₁/Iₜₒₚ=72% and the radial contrast was 0.33, and every value was good.

### COMPARATIVE EXAMPLE 1

An optical recording medium was prepared in the same manner as in Example 1 except that the groove width of the guide grooves was 430 nm and the groove depth was 110 nm, and recording of EFM signals and evaluation were carried out. As a result, the optimum recording power was at most 19 mW, and with respect to the reflectance and the degree of modulation, Rₜₒₚ=70% and I₁₁/Iₜₒₚ=78%, and both values were good, however, the radial contrast was so low as 0.28 since the grooves were shallow.

### COMPARATIVE EXAMPLE 2

An optical recording medium was prepared in the same manner as in Example 1 except that the groove width of the guide grooves was 500 nm and the groove depth was 170 nm, and recording of EFM signals and evaluation were carried out. As a result, Rₜₒₚ=66% and I₁₁/Iₜₒₚ=68%, and the radial contrast was 0.45, and every value was good, however, the sensitivity was inadequate since the grooves were too deep, and the optimum recording power exceeded 19 mW.

### COMPARATIVE EXAMPLE 3

An optical recording medium was prepared in the same manner as in Example 1 except that the groove width of the guide grooves was 520 nm and the groove depth was 140 nm, and recording of EFM signals and evaluation were carried out. As a result, the optimum recording power was at most 19 mW, and with respect to the reflectance and the radial contrast, Rₜₒₚ=72% and the radial contrast was 0.32, and both values were good, however, the degree of modulation was so low as I₁₁/Iₜₒₚ=59%, since the groove width was too broad.

### COMPARATIVE EXAMPLE 4

An optical recording medium was prepared in the same manner as in Example 1 except that the groove width of the guide grooves was 380 nm and the groove depth was 140 nm, and recording of EFM signals and evaluation were carried out. As a result, the minimum recording power was at most 19 mW, and with respect to the degree of modulation and the radial contrast, I₁₁/Iₜₒₚ=72% and the radial contrast was 0.35, and both values were good, however, the reflectance was so low as Rₜₒₚ=61% since the groove width was too narrow.

### COMPARATIVE EXAMPLE 5

Optical recording media were prepared by using a substrate having guide grooves with a groove width of 520 nm and a groove depth of 140 nm, using the metal-containing azo type dye used in Example 1 and a cyanine type dye represented by the following structural formula, respectively: 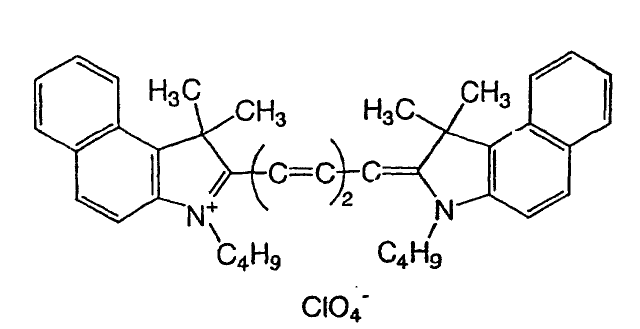 and their BLER (block error rate) margins and crosstalks were compared. Here, of the above cyanine type dye, the heat release value was 955 µV·sec/mg as measured by differential thermal analysis.

According to specifications as defined in orange book, BLER margin is at most 220, but the present inventors judged BLER<10 as a good recording state. On each of the obtained optical recording media, recording was conducted while changing the recording power, and a medium having a broad range (a high percentage) of β (a parameter corresponding to an inverse of the asymmetry of the reproducing signal) which satisfies BLER<10 was judged good.

As a recording apparatus, "Sanyo BP4 (16-times speed drive)" manufactured by Sanyo Electric Co., Ltd. was used, and recording was carried out at 16-times speed (19.2 m/s). The medium after recording was evaluated by means of "CD-TR" manufactured by Expert Magnetics Corp.

In the case of the optical recording medium of Example 1, the range of β which satisfied BLER<10 was at least 35%, the crosstalk was 45% and practically adequate characteristics were obtained.

On the other hand, in the case of the optical recording medium using the above cyanine type dye, there was no range of β which satisfied BLER<10, and the crosstalk was so high as 50%, and it was found that the optical recording medium can not be used practically for high speed recording of e.g. 16-times speed.

### COMPARATIVE EXPERIMENTAL EXAMPLE 1

With respect to a phthalocyanine type dye represented by the following structural formula, differential thermal analysis in nitrogen was carried out in the same manner as in Examples to measure a heat release value. The results are shown in Fig. 4.

As evident from Fig. 4, the heat release value of this dye was 26 µV·sec/mg and was less than 100 µV· sec/mg. Further, in an absorption spectrum of a coating film obtained by spin-coating a 1 wt% ethylcyclohexane solution of this dye on a substrate, followed by drying, the absorbance at a wavelength of 780 nm was 8.8% of the absorbance at a maximum absorption wavelength (730 nm).

In a case where a recording layer containing such a dye as the main component was formed on a substrate having relatively narrow and shallow guide grooves as in the present invention, an optical recording medium to be obtained tends to be inadequate in sensitivity at the time of recording at 16-times speed or higher speed on the whole.

### INDUSTRIAL APPLICABILITY

By combining a substrate having a groove shape of the present invention with a recording layer containing a dye having specific heat release characteristics and having specific absorbance characteristics, a write once type CD (CD-R) on which recording at a high speed can be carried out can be obtained.

## Claims

1. An optical recording medium which comprises a transparent substrate and a recording layer containing a light absorptive dye formed on the substrate, wherein the recording layer satisfies all of the following (1) to (3), the light absorptive dye satisfies the following (4) and the transparent substrate satisfies the following (5):
(1) the recording layer has a maximum absorption wavelength within a wavelength range of from 670 to 750 nm,
(2) the absorbance of the recording layer at a maximum absorption wavelength is from 0.7 to 0.9,
(3) the absorbance of the recording layer at a wavelength of 780 nm is from 10 to 30% of the absorbance at a maximum absorption wavelength,
(4) the heat release value of the light absorptive dye is from 500 to 100 µV·sec/mg as measured by differential thermal analysis in nitrogen, and
(5) the transparent substrate has guide grooves for recording/reproducing light having a width of from 400 to 500 nm and a depth of from 120 to 160 nm.

2. The optical recording medium according to Claim 1, wherein in the above (3), the absorbance of the recording layer at a wavelength of 780 nm is from 10 to 20% of the absorbance at a maximum absorption wavelength.

3. The optical recording medium according to Claim 1, wherein in the above (4), the heat release value of the light absorptive dye is from 300 to 100 µV·sec/mg as measured by differential thermal analysis in nitrogen.

4. The optical recording medium according to Claim 1, wherein the light absorptive dye in the recording layer is at least one member selected from the group consisting of a cyanine type dye, a phthalocyanine type dye and a metal-containing azo type dye.

5. The optical recording medium according to Claim 1, which has the recording layer and a reflective layer sequentially laminated on the transparent substrate.
